(19) Europäisches Patentamt
European Patent Office
Office européen des brevets

(11) **EP 2 680 025 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(51) Int Cl.:
*G01S 15/87* (2006.01)    *G01S 5/12* (2006.01)

(21) Anmeldenummer: **13167929.2**

(22) Anmeldetag: **15.05.2013**

(54) **Verfahren zur Bestimmung eines Standorts eines Objekts**

Method for determining a location of an object

Procédé de détermination du lieu d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012   DE 102012211197
28.09.2012   DE 102012217846**

(43) Veröffentlichungstag der Anmeldung:
**01.01.2014   Patentblatt 2014/01**

(73) Patentinhaber: **ROBERT BOSCH GMBH
70442 Stuttgart (DE)**

(72) Erfinder:
• **Kiss, Arpad
1212 Budapest (HU)**
• **Bagi, Istvan
1063 Budapest (HU)**

(56) Entgegenhaltungen:
**GB-A- 813 126     US-A1- 2011 231 094**

EP 2 680 025 B1

**Beschreibung**

Stand der Technik

Die Erfindung betrifft ein Verfahren zur Bestimmung eines Standorts eines Objekts in einer Umgebung eines Kraftfahrzeugs insbesondere für ein Navigationssystem, wobei ein Objekt mittels Umfeldsensoren erfasst wird und zumindest zwei Abstände des Objekts zu voneinander beabstandeten Umfeldsensoren ermittelt werden.

Die Erfindung betrifft weiterhin ein Computerprogramm und ein Fahrassistenzsystem, die insbesondere zur Ausführung des Verfahrens zur Bestimmung des Standorts eines Objekts geeignet sind.

Die Bestimmung des Standorts eines Objekts in einer Umgebung eines Kraftfahrzeugs, wobei ein Objekt mittels Umfeldsensoren erfasst wird und zumindest zwei Abstände des Objekts zu voneinander beabstandeten Umfeldsensoren ermittelt werden, umfasst im Allgemeinen eine Berechnung des Abstands des Objekts zu dem Fahrzeug. Dies erfordert aufgrund des Satzes von Pythagoras komplexe arithmetische Funktionen wie Multiplikation, Division, Quadrieren, sowie die Berechnung der Quadratwurzel.

GB 624,026 zeigt ein Verfahren zur Positionsbestimmung mit einem Punktnavigationssystem, mit dem ein Standort eines Luftfahrzeugs ausgehend von zwei stationären Messstationen bestimmt werden kann. Neben der Positionsbestimmung für Luftfahrzeuge eignet sich das Verfahren auch zur Festlegung des Ortes von Seefahrzeugen.

Aus US 2011/0231094 A1 ist ein Verfahren zur Lokalisierung eines feststehenden Objekts durch ein Erfassungssystem bekannt, das auf einer mobilen Plattform realisiert ist. Unter Lokalisierung ("geolocating") wird dabei verstanden, dass das Objekt mit Koordinaten bezüglich einer feststehenden, üblicherweise terrestrischen Karte (z.B. GPS Koordinaten), versehen wird. Das Verfahren dient zur Verfeinerung bestehender Landkarten, indem Positionen von Objekten bestimmt und der Karte hinzugefügt werden. Derartige Informationen werden beispilsweise in der Navigation von Schiffen oder Flugzeugen benötigt. Es ist vorgesehen, dass die mobile Plattform, z.B. ein Flugzeug, an zwei unterschiedlichen Positionen P1, P2 den jeweiligen Abstand D1, D2 zu dem betreffenden Objekt O misst. Die so erhaltenen Datenpaare erlauben eine Positionierung des Objekts O in einem vorgegebenen Koordinatensystem. Dabei wird beschrieben, dass zur Erhöhung der Genauigkeit ein elliptisch-hyperbolisches Koordinatensystem verwendet werden kann.

Aus GB 813 126 A betrifft ein Messverfahren bei dem mittels Radiowellen die Position eines Objekts erfasst wird. dabei werden Sender an zwei festen Positionen A und B verwendet. Die ausgesendeten Signale weisen unterschiedliche Periodendauern auf. Es ist weiterhin vorgesehen, dass auch das Objekt selbst die Signale der Sender empfangen und selbst Signale aussenden kann.

Offenbarung der Erfindung

Bei dem erfindungsgemäßen Verfahren zur Bestimmung des Standorts eines Objekts in einer Umgebung eines Kraftfahrzeugs, bei dem ein Objekt mittels Umfeldsensoren erfasst wird und zumindest zwei Abstände des Objekts zu voneinander beabstandeten Umfeldsensoren ermittelt werden, ist vorgesehen, dass die ermittelten zwei Abstände des Objekts zu den voneinander beabstandeten Umfeldsensoren miteinander addiert werden und das Ergebnis des Betrags der Addition der beiden Abstände einer elliptischen Koordinate auf einer Ellipsenkarte zugeordnet wird, die ermittelten zwei Abstände des Objekts zu den voneinander beabstandeten Umfeldsensoren voneinander subtrahiert werden und das Ergebnis des Betrags der Subtraktion der beiden Abstände einer hyperbolischen Koordinate auf einer Hyperbelkarte zugeordnet wird und dem Objekt die elliptischen und hyperbolischen Koordinaten zugewiesen werden.

Das Ergebnis des Betrags der Addition der Abstände wird im Folgenden auch als ein elliptischer Abstand bezeichnet und das Ergebnis des Betrags der Subtraktion der Abstände wird im Folgenden auch als ein hyperbolischer Abstand des Objekts zum Fahrzeug bezeichnet. Durch die Zuweisung der elliptischen und hyperbolischen Koordinaten wird das Objekt in einem elliptisch-hyperbolischen, d.h. insbesondere krummlinigen Koordinatensystem lokalisierbar. Die Lokalisierung erfordert lediglich eine Addition, eine Subtraktion und eine boolesche Algebra unter Auswertung eines AND-Operators. Somit ermöglicht das Verfahren eine Bestimmung des Standorts des Objekts ohne komplexe arithmetische Funktionen wie Multiplikation, Division, Quadrieren, sowie die Berechnung der Quadratwurzel.

Erfindungsgemäß ist das elliptisch-hyperbolische Koordinatensystem diskretisiert. Ein diskretes Netzgitter eines elliptisch-hyperbolischen Koordinatensystems kann beispielsweise durch eine Ellipsenschar und eine Hyperbelschar definiert sein. Die Ellipsenschar und die Hyperbelschar umfassen dabei jeweils eine endliche Anzahl von Elementen, zumindest jeweils ein Element, bevorzugt jeweils zwei, drei, vier, fünf, zehn, bzw. eine Vielzahl von Elementen.

Erfindungsgemäß werden den zwei voneinander beabstandeten Umfeldsensoren eine Ellipsenschar und eine Hyperbelschar zugeordnet. Dabei ist vorgesehen, dass die Lagen der jeweils zwei voneinander beabstandeten Sensoren gemeinsamen Foki der Ellipsenschar und der Hyperbelschar zugeordnet werden.

Der ermittelte elliptische Abstand des Objekts und der ermittelte hyperbolische Abstand des Objekts werden in dieser Ausführungsform einem Bereich in dem diskretisierten elliptisch-hyperbolischen Koordinatensystem zugewiesen. Das Objekt kann somit in dem diskretisierten elliptisch-hyperbolischen Koordinatensystem lokalisiert werden.

Bevorzugt ist das diskretisierte elliptisch-hyperbolische Koordinatensystem in einem Fernfeld gröber diskretisiert ist als in einem Nahfeld. Hierdurch kann der Tatsache Rechnung getragen werden, dass Relativbewegungen von Objekten im Nahfeld, d.h. in einem näheren Abstand zum Fahrzeug, bedeutsamer sind als solche im Fernfeld, d.h. in einem weiter entfernten Bereich. Außerdem kann im Nahfeld eine genauere Auflösung der Umgebung aus anwendungsspezifischen Gründen nötig sein, beispielsweise bei einem Einsatz des Systems als Einparkassistent.

Die Umfeldsensoren umfassen Sensoren zur Umgebungserfassung des Fahrzeugs. Besonders vorteilhaft ist, die Erfindung mit üblichen verbauten Sensoren am Kraftfahrzeug umzusetzen, so dass keine zusätzlichen Sensorsysteme benötigt werden.

Sensoren zur Umgebungserfassung befinden sich im Allgemeinen im Front- und im Heckbereich des Kraftfahrzeugs. Alternativ oder zusätzlich ist es auch möglich, an den Seiten des Kraftfahrzeugs Sensoren anzuordnen. Sensoren, die erfindungsgemäß eingesetzt werden können, sind Ultraschallsensoren in einem Ultraschallsystem mit einer zeitlichen Auflösung in der Größenordnung von 60-120 ms. Besonders bevorzugt als Sensoren des Erfassungssystems zur Erfassung der Umgebung des Kraftfahrzeugs sind die Ultraschallsensoren aufgrund ihrer günstigen Verfügbarkeit.

Ultraschallsensoren zur Erfassung der Umgebung werden üblicherweise im vorderen und im hinteren Stoßfänger des Kraftfahrzeugs positioniert. Um insbesondere auch den Bereich neben dem Kraftfahrzeug zu erfassen, können im vorderen Stoßfänger Sensoren positioniert sein, die nach links und nach rechts ihren Erfassungsbereich haben. Zusätzlich oder alternativ können auch im hinteren Stoßfänger Sensoren derart positioniert sein, dass diese einen Bereich links und rechts neben dem Kraftfahrzeug erfassen.

Nach einer Ausführungsform wird ein Objekt, welches sich in einem Erfassungsbereich der Sensoren befindet, durch ein Ermitteln von Abständen zu zumindest zwei voneinander beabstandeten Umfeldsensoren erfasst. Es kann aber auch vorgesehen sein, dass das Objekt durch Ermitteln von Abständen zu drei, vier oder mehr voneinander beabstandeten Umfeldsensoren erfasst wird. Jeweils zwei der Sensoren werden im Folgenden auch als Sensorpaare bezeichnet. Die Involvierung mehrerer Sensorpaare führt im Rahmen der Erfindung zu einer erhöhten Objektplausibilisierung und zu einer Steigerung der Genauigkeit bei der Positionsbestimmung des erfassten Objekts.

Nach einer Ausführungsform wird jeweils zwei Sensoren zur Erfassung der Umgebung ein gemeinsamer Erfassungsbereich zugeordnet und der gemeinsame Erfassungsbereich durch ein elliptisch-hyperbolisches Koordinatensystem kartographiert. Bevorzugt ist die Umgebung des Kraftfahrzeugs im gesamten Erfassungsbereich der Umfeldsensoren durch zumindest ein elliptisch-hyperbolisches Koordinatensystem vollständig überdeckt. Bei Verwendung mehrerer Sensorpaare können mehrere elliptisch-hyperbolische Koordinatensysteme involviert sein und Bereiche des Umfelds mehrfach überdeckt sein. In diesem Fall sind geeignete Übergangsfunktionen der verschiedenen Karten bekannt und die Überdeckungsbereiche lassen sich zu einem gemeinsamen Überdeckungsbereich vereinigen.

Das Verfahren kann vorteilhaft im Rahmen von Fahrassistenzsystemen zur Vermeidung von Auffahrunfällen und/oder zur Verminderung von Unfallschäden durch einen Auffahrunfall eines voranfahrenden Fahrzeugs mit einem nachfolgenden Fahrzeug angewendet werden. Auch Abstandshaltesysteme zu einem Vorderfahrzeug (ACC, adaptive cruise control) können von dem erfindungsgemäßen Verfahren profitieren. Das Verfahren kann außerdem vorteilhaft beispielsweise im Rahmen von Backover Avoidance-Systemen, d. h. einer Vermeidung von Überfahren von Verkehrsteilnehmern im Rückwärtsgang und/oder als Teil einer Parkassistenzeinrichtung verwendet werden. Die Breite der Anwendbarkeit des Verfahrens ist für den Fachmann ersichtlich. Die durch die Umfeldsensoren gewonnene Information über die Fahrzeugumgebung können darüber hinaus auch an den Fahrer ausgegeben werden, z. B. als 3D-Bild der Umgebung aus einer Topview oder auf einem Head-up- oder Head-down-Display.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Erfindungsgemäß ist außerdem ein Fahrassistenzsystem zur Ausführung eines der beschriebenen Verfahren vorgesehen, insbesondere zur Navigation, umfassend zumindest zwei voneinander beabstandete Umfeldsensoren, mittels welchen zwei Abstände eines Objekts in einer Umgebung eines Kraftfahrzeugs zu den Umfeldsensoren ermittelbar ist und ein Modul zur Berechnung des Betrags der Addition der ermittelten zwei Abstände des Objekts zu den voneinander beabstandeten Umfeldsensoren, zur Berechnung des Betrags der Subtraktion der ermittelten zwei Abstände des Objekts zu den voneinander beabstandeten Umfeldsensoren und zur Zuweisung von elliptischen und hyperbolischen Koordinaten des Objekts in einem elliptisch-hyperbolischen Koordinatensystem.

Nach einer bevorzugten Ausführungsform der Erfindung wird das Fahrassistenzsystem und/oder das Computerprogramm auf einem RISC (Reduced Instruction Set Computer), d. h. einem Rechner mit reduziertem Befehlssatz ausgeführt. Die Beschränkung auf einfache Befehle ermöglicht beispielsweise ein sehr einfaches Chipdesign und eine sehr schnell Taktung.

Das System ist auf einer ASIC (anwendungsspezifische integrierte Schaltung) implementierbar, das für den speziellen Einsatzzweck entworfen worden sein kann. Besonders bevorzugt ist dabei eine ASIC mit einem kleinen RISC Controller. Vorteile hiervon sind, dass diese Bausteine platz-, verbrauchs-, kosten- oder leistungsoptimiert arbeiten können.

Es ist insbesondere auch möglich, dass das System auf einer anwendungsspezifischen integrierten Schaltung implementiert ist und dass Hardware-nah eine Zuordnung der Hindernisse zu definierten Umgebungsbereichen erfolgen kann, wodurch bereits auf Hardwareebene Alarmsignale und/oder Reaktionen ausgelöst werden können.

Kurze Beschreibung der Zeichnungen

Ausführungsbeispiele der Erfindung sind in den Zeichnungen dargestellt und in der nachfolgenden Beschreibung näher erläutert.

Es zeigen

Fig. 1    eine beschriftete Darstellung einer Ellipse,
Fig. 2    eine beschriftete Darstellung zweier Hyperbeln,
Fig. 3    ein Abschnitt eines Fahrzeugs mit zwei Umfeldsensoren und einem Objekt in einer Umgebung,
Fig. 4    ein Abschnitt eines Fahrzeugs mit zwei Umfeldsensoren und einem Objekt in einer Umgebung,
Fig. 5    ein Abschnitt eines Fahrzeugs mit zwei Umfeldsensoren und einem Objekt in einer Umgebung,
Fig. 6    eine Nachschlagetabelle,
Fig. 7    einen schematischen Ablauf zur Bestimmung eines Standorts eines Objekts in einer Fahrzeugumgebung.

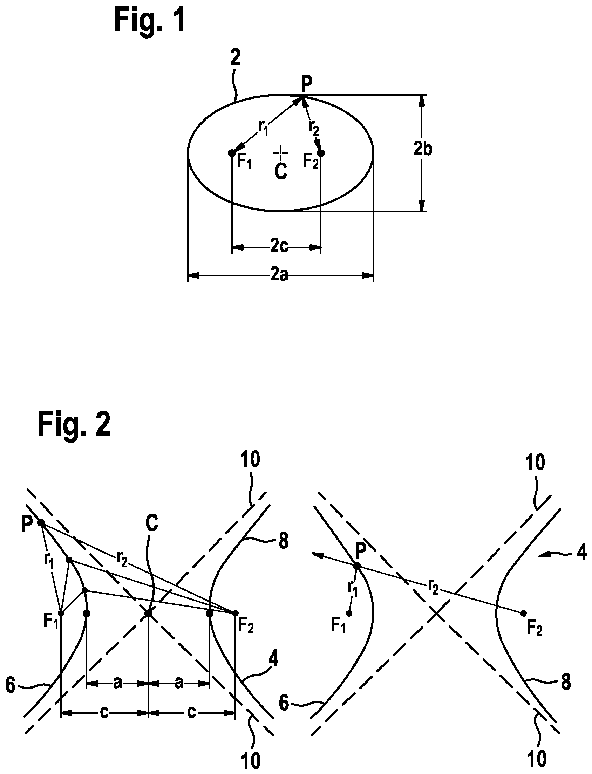

Fig. 1 zeigt eine beschriftete Darstellung einer Ellipse 2 mit einem Zentrum C, einem ersten Fokus $F_1$ und einem zweiten Fokus $F_2$.

Die Ellipse 2 kann in einer Ebene als ein Ort all jener Punkte P definiert sein, deren Summe von Abständen $r_1$ und $r_2$ zu den Foki $F_1$ und $F_2$ eine positive Konstante 2a ist, also durch

$$r_1 + r_2 = 2a.$$

Die beiden Foki sind in einem Abstand von 2c zueinander beabstandet. Die Ellipse zeichnet sich weiterhin aus durch eine Hauptachse der Größe 2a und eine Nebenachse der Größe 2b.

Fig. 2 zeigt eine beschriftete Darstellung einer Hyperbel 4 mit einem Zentrum und zwei Punkten $F_1$ und $F_2$, welche jeweils durch einen Abstand c vom Zentrum beabstandet sind.

Eine Hyperbel ist ein Kegelschnitt, welcher als ein Ort all jener Punkte P definiert sein kann, deren Betrag der Differenz der Abstände $r_1$ und $r_2$ zu zwei fixierten Punkten $F_1$ und $F_2$ durch eine positive Konstante k gegeben ist, d. h.

$$\left| r_1 - r_2 \right| = k.$$

Die beiden fixierten Punkte $F_1$ und $F_2$ können wie im Falle der Ellipse 2 ebenfalls als Foki bezeichnet sein.

Die Hyperbel 4 weist einen ersten Ast 6 und einen zweiten Ast 8 auf, welche sich in einem geeigneten Koordinatensystem asymptotisch zwei Winkelhalbierenden 10 annähern. Die beiden Äste 6, 8 sind in einem Abstand 2a voneinander beabstandet.

Ausführungsformen der Erfindung

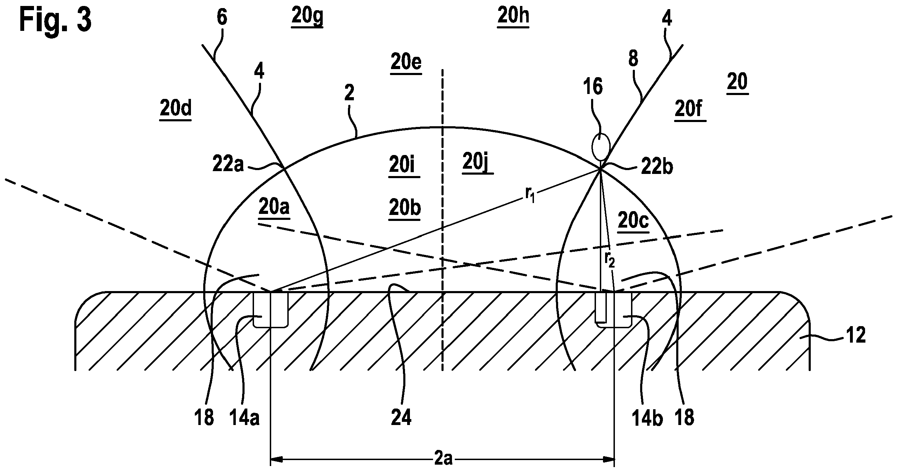

Fig. 3 zeigt eine Fahrzeugfront 12 mit zwei Sensoren 14a, 14b, welche in einem Abstand 2a zueinander angeordnet sind. Die Sensoren 14a, 14b sind ausgebildet, um ein Signal auszusenden, insbesondere ein Pulssignal und ein Echo von einem Objekt 16 zu empfangen. Die Sensoren 14a, 14b können etwa Lasersensoren, Radarsensoren oder Ultraschallsensoren sein. Für den Fall, dass ein Sensor sein selbst ausgesendetes Echosignal empfängt, ist der Abstand des Objekts 16 unter Vernachlässigung des Dopplereffekts im Wesentlichen proportional zu der Zeit, welche zwischen der Aussendung des Impulses und dem Empfang des Impulses vergangen ist. Natürlich kann bei der Abstandsmessung der Dopplereffekt berücksichtigt werden. Die Sensoren können auch im Kreuzbetrieb verwendet werden und die Signale der jeweils anderen Sensoren empfangen und auswerten. Die Sensoren 14a, 14b können im Prinzip beliebige auf dem Echoprinzip basierende Sensoren eines Fahrassistenzsystems sein, vorausgesetzt, dass sie einen Überlappungsbereich in ihren Erfassungsbereichen 18 aufweisen. Die Sensoren 14a, 14b sind bevorzugt nebeneinander angeordnet, d. h. sie sind benachbarte Sensoren 14a, 14b beispielsweise eines Ultraschallsystems, um eine ausreichende Signalstärke zu erzielen.

In der in Fig. 3 dargestellten Ausführungsform ist die Umgebung 20 des Fahrzeugs, beispielsweise eine frontseitige Umgebung oder eine heckseitige Umgebung, durch eine Ellipse 2 und eine Hyperbel 4 in sechs Bereiche 20a, 20b, 20c, 20d, 20e, 20f zergliedert. Durch den Vergleich der Abstände des detektierten Objekts zu beiden Sensoren erfolgt eine weitere Zergliederung der mittleren Bereiche 20b, 20e zwischen den Hyperbelästen 6, 8 jeweils in linke und rechte Bereiche 20g, 20h, 20i, 20j, so dass sich insgesamt acht Bereiche definieren lassen. Den acht Bereichen können in vielfältiger Weise elliptische Koordinaten und hyperbolische Koordinaten zugeordnet werden, beispielsweise können die Bereiche 20a, 20b, 20c, bzw. die Bereiche 20a, 20i, 20j, 20c die elliptische Koordinate 1 aufweisen und die Bereiche 20d, 20e, 20f, bzw. 20d, 20g, 20h, 20f die elliptische Koordinate 2 aufweisen. Entsprechend können die Bereiche 20j, 20h die hyperbolische Koordinate 1 aufweisen, die Bereiche 20c, 20f die hyperbolische Koordinate 2, die die Bereiche 20i, 20g die hyperbolische Koordinate -1 und die Bereiche 20aj, 20d die hyperbolische Koordinate -2 oder die Bereiche 20b, 20e die hyperbolische Koordinate 0, die Bereiche 20c, 20f die hyperbolische Koordinate 1 und die Bereiche 20a, 20d die hyperbolische Koordinate -1.

Die Sensoren 14 sind in den Foki der Ellipse 2 und der Hyperbel 4 angeordnet. Hierdurch wird erreicht, dass die Ellipse 2 und die Hyperbel 4 sich im Erfassungsbereich 18 der Sensoren 14 zweimal senkrecht schneiden, nämlich in einem ersten Schnittpunkt 22a, welcher in der Nähe des ersten Sensors 14a angeordnet ist und in einem zweiten Schnittpunkt 22b, welcher in der Nähe des zweiten Sensors 14b angeordnet ist. Die Informationen unterhalb der großen Halbachse 24 der Ellipse 2 sind im Allgemeinen für das System unerheblich.

Das hier beispielhaft dargestellte Objekt 16 befindet sich außerhalb der Ellipse 2 und innerhalb des durch beide Hyperbeläste 6, 8 begrenzten Bereichs 20e, wie sich durch die Bestimmung des Abstands zu den Sensoren 14 feststellen lässt. Das Objekt befindet sich außerdem näher zu dem zweiten, rechten Sensor 14b. Hierdurch ist das Objekt 16 in der Umgebung durch Bezeichnung des Bereichs 20h eindeutig lokalisierbar. Dem Objekt kann daher eine elliptische Koordinate, z. B. 2, und eine hyperbolische Koordinate, z.B. 1, zugewiesen werden.

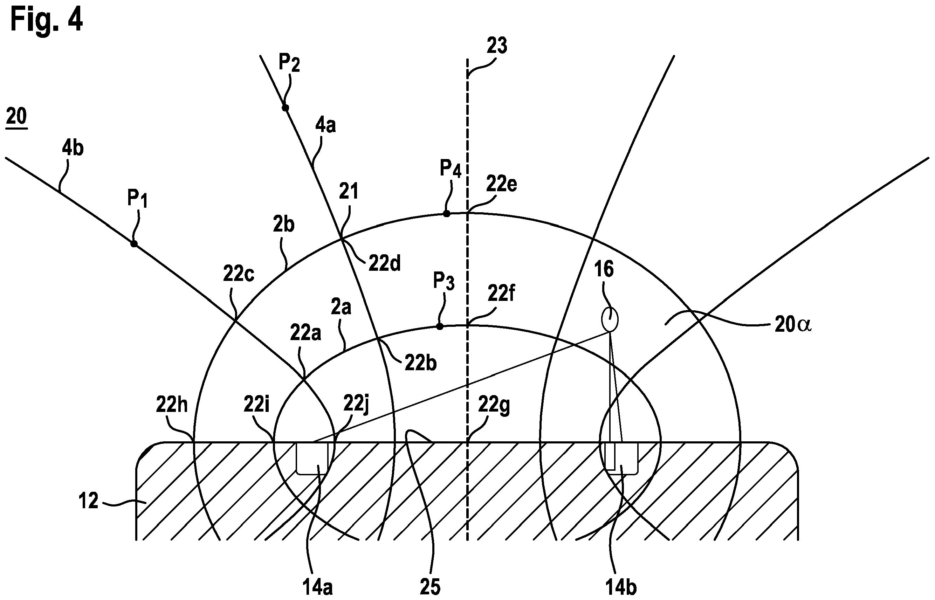

Fig. 4 zeigt eine Umgebung 20, welche mittels zweier Ellipsen 2a, 2b und zweier Hyperbeln 4a, 4b in 18 Bereiche zergliedert ist. Die beiden Ellipsen 2a, 2b können als zwei Elemente einer Ellipsenschar bezeichnet werden, deren Foki zusammenfallen und die mit den Sensoren 14 zusammenfallen. Analog können die beiden Hyperbeln 4a, 4b als zwei Elemente einer Hyperbelschar bezeichnet werden, deren Foki zusammenfallen und die mit den Sensoren 14 zusammenfallen. Ein Netzgitter 21 eines elliptisch-hyperbolischen Koordinatensystems umfasst 19 Punkte, nämlich die acht Schnittpunkte 22a, 22b, 22c, 22d der Ellipsen 2a, 2b und Hyperbeln 4a, 4b, wobei zur Übersichtlichkeit nur vier davon bezeichnet sind, die acht Schnittpunkte 22h, 22i, 22j der Ellipsen 2a, 2b und Hyperbeln 4a, 4b mit einer Geraden 25, welche durch die Fahrzeugfront gegeben ist, genauer durch die Lage der beiden Sensoren 14, wobei zur Übersichtlichkeit nur drei davon bezeichnet sind, und die drei Schnittpunkte 22e, 22f, 22g der Ellipsen 2a, 2b mit einer Mittelsenkrechten 23 der Fahrzeugfront. Hierdurch ergeben sich 18 Bereiche, wobei ein Bereich $20\alpha$ der Umgebung 20 beispielhaft gekennzeichnet wurde, der sich zwischen den beiden Hyperbeln 4a, 4b und den beiden Ellipsen 2a, 2b befindet.

Für Punkte $P_1$ auf der den Sensoren 14 näherliegenden Hyperbel 4b ist der Betrag der Differenz der Abstände $|r_1-r_2|$ zu den Sensoren 14 gleich $2a_1$. Für Punkte $P_2$ auf der dem Zentrum näher gelegenen Hyperbel ist der Betrag der Differenz der Abstände $|r_1-r_2|$ gleich $2a_2$. Für Punkte $P_3$ auf der inneren Ellipse 2a ist der Betrag der Summe der Abstände $r_1+r_2$ zu den beiden Sensoren 14 gleich $2a_3$. Für Punkte $P_4$ auf der äußeren Ellipse 2b ist der Betrag der Summe der Abstände $r_1+r_2$ zu den beiden Sensoren 14 gleich $2a_4$.

Das beispielhaft dargestellte Objekt 16, welches sich im Bereich $20\alpha$ zwischen den beiden Hyperbeln 4a, 4b und den beiden Ellipsen 2a, 2b befindet, erfüllt beispielsweise die folgenden Ungleichungen:

$$2a_3 \leq (r_1 + r_2) \leq 2a_4$$

$$2a_1 \geq \left| r_1 - r_2 \right| \geq 2a_2.$$

Für den Bereich $20\alpha$ kann daher folgende Logik gebildet werden:

$$(\text{er1}) \qquad 2a_3 \leq (r_1 + r_2) \leq 2a_4$$

$$(\text{hr2}) \qquad 2a_1 \geq \left| r_1 - r_2 \right| \geq 2a_2$$

$$(\text{cf1}) \qquad ((\text{er1}) \text{ AND } (\text{hr2})) = \text{true}.$$

Hierdurch wird klar, dass lediglich eine Addition, eine Subtraktion und eine boolesche Algebra unter Auswertung eines AND-Operators nötig sind, um das Objekt 16 in dem Bereich $20\alpha$ zu lokalisieren. Die Logik mit den drei Gleichungen lässt sich für 15 Bereiche aufstellen, wobei der Bereich zwischen den Hyperbelästen nicht unterteilt ist.

Eine weitere Logik für den Bereich $20\alpha$ kann die Folgende sein:

$$(\text{er1}) \qquad 2a_3 \leq (r_1 + r_2) \leq 2a_4$$

$$(hr2) \qquad 2a_1 \geq \left| r_1 - r_2 \right| \geq 2a_2$$

$$(lr3) \qquad r_1 > r_2$$

$$(cf1) \qquad ((er1) \; AND \; (hr2) \; AND \; (lr3)) = true.$$

Die Logik mit den vier Gleichungen lässt sich für alle 18 Bereiche aufstellen, wobei der Bereich zwischen den Hyperbelästen in einen linken und einen rechten unterteilt ist.

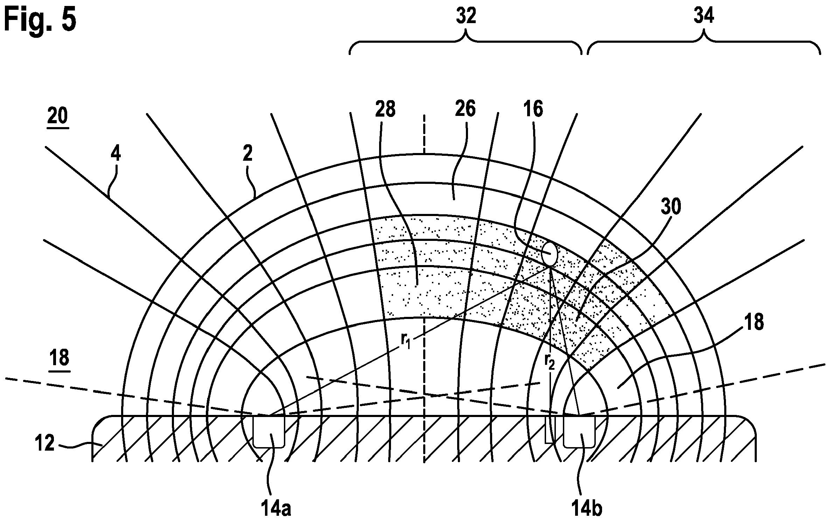

Fig. 5 zeigt eine Kartographierung der Umgebung 20 einer Fahrzeugfront, bei welcher eine Vielzahl von Ellipsen 2 und Hyperbeln 4, hier beispielsweise 6 Ellipsen und 5 Hyperbeln, verwendet werden. Durch die große Anzahl von Hyperbeln 4 und Ellipsen 2 ist die Auflösung der Umgebung 20 im Erfassungsbereich 18 der Sensoren 14 hoch. Es kann vorgesehen sein, dass ein Fernfeld 26 der Umgebung 20 des Kraftfahrzeugs gröber skaliert, d. h. weniger hoch aufgelöst ist als ein Nahfeld 28 der Umgebung des Kraftfahrzeugs.

Weiterhin ist darstellt, dass die Bereiche klassifiziert sind, beispielsweise nach einer Kritikalität. Das Fernfeld 26 kann durch zwei Ellipsen begrenzt sein, die jeweils einen hohen Wert der großen Halbachse aufweisen. Dem Fernfeld 26 kann eine niedrige Kritikalität zugeordnet sein. Das Nahfeld 28 kann durch zwei Ellipsen begrenzt sein, die jeweils einen niedrigen Wert der großen Halbachse aufweisen. Das Nahfeld 28 kann eine hohe Kritikalität aufweisen. Auch kann eine Klassifizierung hinsichtlich der hyperbolischen Koordinaten erfolgen. So kann ein Zentralbereich 32 generell kritischer klassifiziert sein als ein periphärer Bereich 34. Die Kritikalität kann auch, wie in Figur 5 angedeutet, mit Bezug zu dem tatsächlichen pythagoreischen Abstand des Objekts zum Fahrzeug festgelegt sein, da diese Berechnungen nicht in Echtzeit erfolgen müssen sondern in einer Tabelle gespeichert sein können. Beispielhaft ist ein sehr nah am Fahrzeug gelegener, besonders kritischer Bereich 30 dargestellt.

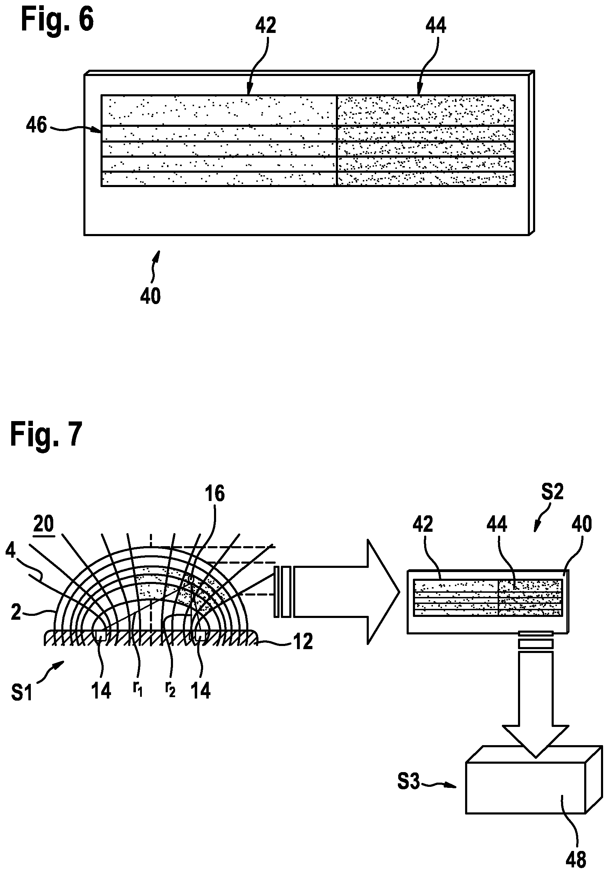

Fig. 6 zeigt eine Nachschlagetabelle 40, welche zur Bestimmung eines Standorts eines Objekts in einer Umgebung eines Kraftfahrzeugs verwendet werden kann. In einer linken Spalte 42 wird eine boolesche Logik zur Kodierung eines Umfeldbereichs gespeichert, beispielsweise eine der mit Bezug zu Figur 4 beschriebenen Logiken, und in einer rechten Spalte 44 eine Cross Section ID ermittelt, d.h. ein Identifikationszeichen des Umfelds, das beispielsweise eine Kennzahl und/oder eine Farbe umfassen kann. Die Nachschlagetabelle 40 ist bevorzugt in einer Boyce-Cod-3rd-Form ausgewiesen, da die Kennzahl der rechten Spalte 44 eindeutig dem Primary Key zugeordnet ist. Der Primary Key hängt nur von den Beträgen von $r_1 + r_2$ und $|r_1\text{-}r_2|$ ab, d. h. von den direkt gemessenen Echosignalen. Auf diese Weise ist jedem Bereich in dem mit Bezug auf die Figuren 3 bis 5 beschriebenen diskretisierten elliptisch-hyperbolischen Koordinatensystemen eindeutig eine Zeile 46 in der Nachschlagetabelle 40 zugewiesen und folglich jedem Bereich der in elliptisch-hyperbolischen Koordinaten diskretisierten Umgebung des Fahrzeugs eindeutig eine Zeile 46 in der Nachschlagetabelle 40 zugewiesen. Es ist möglich, die Nachschlagetabelle 40 zu indizieren, so dass effiziente Suchalgorithmen implementiert werden können. Die Auflösung der Umgebung wird direkt durch die Anzahl der Zeilen 46 in der Nachschlagetabelle 40 bestimmt.

Fig. 7 zeigt ein Schema zur Bestimmung eines Standorts eines Objekts in der Umgebung eines Kraftfahrzeugs. In einem ersten Schritt S1 wird, wie mit Bezug auf die Figuren 3 bis 5 beschrieben, die Summe der Abstände $r_1 + r_2$ und des Betrags der Differenzen der Abstände $|r_1\text{-}r_2|$ des Objekts 16 zu den beiden Sensoren 14 bestimmt. In einem zweiten Schritt S2 wird, wie mit Bezug zur Figur 6 beschrieben, in der Nachschlagetabelle 40 die Logik der ersten Spalte 42 ausgewertet und aus der zweiten Spalte 44 ein Identifikationszeichen des Umfelds ermittelt und in einem dritten Schritt S3 einem Steuergerät 48 bereitgestellt oder übergeben. Das Steuergerät 48 kann ein beliebiges Fahrassistenzsystem sein, welches Informationen über Objekte in der Umgebung des Fahrzeugs verwendet oder eine ASIC, insbesondere mit einem kleinen RISC Controller.

Da das System nicht durch die algorithmische Komplexität begrenzt ist, sondern durch das zeitliche Auflösungsvermögen der Sensoren 14, kann die Objektdetektion quasi in Echtzeit, d. h. beispielsweise bei einem Ultraschallsystem in einer zeitlichen Auflösung in der Größenordnung von 60-120 ms erfolgen. Somit können dem Fahrassistenzsystem alle 60-120 ms ein Ort des Objekts und/oder eine Gefahrenklasse und/oder ein Steuerungsbefehl, beispielsweise ein Stoppsignal übergeben werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

**Patentansprüche**

1. Verfahren zur Bestimmung eines Standorts eines Objekts (16) in einer Umgebung (20) eines Kraftfahrzeugs, insbesondere für ein Fahrassistenzsystem, wobei ein Objekt (16) mittels an dem Kraftfahrzeug angeordneter Umfeldsensoren (14) erfasst wird und wobei zumindest zwei Abstände ($r_1$, $r_2$) des Objekts (16) zu voneinander beabstandeten Umfeldsensoren (14a, 14b) ermittelt werden, wobei die ermittelten zwei Abstände ($r_1$, $r_2$) des Objekts (16) zu den voneinander beabstandeten Umfeldsensoren (14a, 14b) miteinander addiert werden und das Ergebnis der Addition der beiden Abstände ($r_1$, $r_2$) einer elliptischen Koordinate auf einer Ellipsenkarte zugeordnet wird und wobei die ermittelten zwei Abstände ($r_1$, $r_2$) des Objekts (16) zu den voneinander beabstandeten Umfeldsensoren (14a, 14b) voneinander subtrahiert werden und das Ergebnis des Betrags der Subtraktion der beiden Abstände einer hyperbolischen Koordinate auf einer Hyperbelkarte zugeordnet wird, und wobei dem Objekt (16) die elliptischen und hyperbolischen Koordinaten eines elliptisch- hyperbolischen Koordinatensystem zugewiesen werden, wobei das elliptisch-hyperbolische Koordinatensystem ein diskretes Netzgitter aufweist, das durch eine Ellipsenschar und eine Hyperbelschar definiert ist, wobei den Lagen der jeweils zwei voneinander beabstandeten Umfeldsensoren (14a, 14b) gemeinsamen Foki der Ellipsenschar und der Hyperbelschar zugeordnet sind, wobei die Umfeldsensoren (14) als Ultraschallsensoren mit einer zeitlichen Auflösung in der Größenordnung von 60 bis 120 ms ausgebildet sind.

**2.** Verfahren nach Anspruch 1, **dadurch gekennzeichnet, dass** das diskretisierte elliptisch-hyperbolische Koordinatensystem in einem Fernfeld (26) gröber diskretisiert ist als in einem Nahfeld (28).

**3.** Verfahren nach einem Anspruch 1, **dadurch gekennzeichnet, dass** jedem Bereich (20a, 20b, 20c, 20d, 20e, 20f, 20g, 20h, 20i, 20j) des diskretisierten elliptisch-hyperbolischen Koordinatensystems eine Kennzahl zugewiesen ist.

**4.** Verfahren nach einem der vorhergehenden Ansprüche, **dadurch gekennzeichnet, dass** jedem Bereich (20a, 20b, 20c, 20d, 20e, 20f, 20g, 20h, 20i, 20j) des diskretisierten elliptisch-hyperbolischen Koordinatensystems eindeutig eine Zeile (46) in einer Nachschlagetabelle zugewiesen ist.

**5.** Verfahren nach einem der vorhergehenden Ansprüche, **dadurch gekennzeichnet, dass** die Umgebung (20) des Kraftfahrzeugs im Erfassungsbereich (18) der Umfeldsensoren (14) durch zumindest ein elliptisch-hyperbolisches Koordinatensystem überdeckt ist.

**6.** Computerprogramm zur Durchführung eines der Verfahren nach einem der Ansprüche 1-5, wenn das Computerprogramm auf einer programmierbaren Computereinrichtung, insbesondere auf einem RISC ausgeführt wird.

**7.** Fahrassistenzsystem, insbesondere zur Navigation, umfassend zumindest zwei an einem Kraftfahrzeug angeordnete, voneinander beabstandete Umfeldsensoren (14a, 14b), mittels welchen zwei Abstände ($r_1$, $r_2$) eines Objekts (16) in einer Umgebung (20) eines Kraftfahrzeugs zu den Umfeldsensoren (14a, 14b) ermittelbar sind, ein Modul zur Berechnung des Betrags der Addition der ermittelten zwei Abstände ($r_1$, $r_2$) des Objekts (16) zu den voneinander beabstandeten Umfeldsensoren (14a, 14b), ein Modul zur Berechnung des Betrags der Subtraktion der ermittelten zwei Abstände ($r_1$, $r_2$) des Objekts (16) zu den voneinander beabstandeten Umfeldsensoren (14a, 14b) und ein Modul zur Zuweisung von elliptischen und hyperbolischen Koordinaten eines elliptisch-hyperbolischen Koordinatensystem des Objekts (16), wobei das elliptisch-hyperbolische Koordinatensystem ein diskretes Netzgitter aufweist, das durch eine Ellipsenschar und eine Hyperbelschar definiert ist, wobei den Lagen der jeweils zwei voneinander beabstandeten Umfeldsensoren (14a, 14b) gemeinsamen Foki der Ellipsenschar und der Hyperbelschar zugeordnet sind, wobei die Umfeldsensoren (14) als Ultraschallsensoren mit einer zeitlichen Auflösung in der Größenordnung von 60 bis 120 ms ausgebildet sind.

## Claims

**1.** Method for determining a location of an object (16) in an environment (20) of a motor vehicle, in particular for a driving assistance system, wherein an object (16) is captured using environmental sensors (14) arranged on the motor vehicle, and wherein at least two distances ($r_1$, $r_2$) between the object (16) and environmental sensors (14a, 14b) spaced apart from one another are determined, wherein the determined two distances ($r_1$, $r_2$) between the object (16) and the environmental sensors (14a, 14b) spaced apart from one another are added to one another and the result of the addition of the two distances ($r_1$, $r_2$) is assigned to an elliptical coordinate on an elliptical map, and wherein the determined two distances ($r_1$, $r_2$) between the object (16) and the environmental sensors (14a, 14b) spaced apart from one another are subtracted from one another and the result of the absolute value of the subtraction of the two distances is assigned to a hyperbolic coordinate on a hyperbolic map, and wherein the elliptical and hyperbolic coordinates of an elliptical-hyperbolic coordinate system are allocated to the object (16), wherein the elliptical-hyperbolic coordinate system has a discrete network grid which is defined by a family of ellipses and a family of hyperbolas, wherein common foci of the family of ellipses and the family of hyperbolas are assigned to the positions of the two environmental sensors (14a, 14b) respectively spaced apart from one another, wherein the environmental sensors (14) are in the form of ultrasonic sensors with a temporal resolution of the order of magnitude of 60 to 120 ms.

**2.** Method according to Claim 1, **characterized in that** the discretized elliptical-hyperbolic coordinate system is discretized more roughly in a far field (26) than in a near field (28).

**3.** Method according to Claim 1, **characterized in that** a characteristic number is allocated to each region (20a, 20b, 20c, 20d, 20e, 20f, 20g, 20h, 20i, 20j) of the discretized elliptical-hyperbolic coordinate system.

**4.** Method according to one of the preceding claims, **characterized in that** a row (46) in a lookup table is uniquely allocated to each region (20a, 20b, 20c, 20d, 20e, 20f, 20g, 20h, 20i, 20j) of the discretized elliptical-hyperbolic coordinate system.

**5.** Method according to one of the preceding claims, **characterized in that** the environment (20) of the motor vehicle in the capture region (18) of the environmental sensors (14) is covered by at least one elliptical-hyperbolic coordinate system.

**6.** Computer program for carrying out one of the methods according to one of Claims 1-5 when the computer program is executed on a programmable computer device, in particular on an RISC.

**7.** Driving assistance system, in particular for navigation, comprising at least two environmental sensors (14a, 14b) which are arranged on a motor vehicle, are spaced apart from one another and can be used to determine two distances ($r_1$, $r_2$) between an object (16) in an environment (20) of a motor vehicle and the environmental sensors (14a, 14b), a module for calculating the absolute value of the addition of the determined two distances ($r_1$, $r_2$) between the object (16) and the environmental sensors (14a, 14b) spaced apart from one another, a module for calculating the absolute value of the subtraction of the determined two distances ($r_1$, $r_2$) between the object (16) and the environmental sensors (14a, 14b) spaced apart from one another, and a module for allocating elliptical and hyperbolic coordinates of an elliptical-hyperbolic coordinate system of the object (16), wherein the elliptical-hyperbolic coordinate system has a discrete network grid which is defined by a family of ellipses and a family of hyperbolas, wherein common foci of the family of ellipses and the family of hyperbolas are assigned to the positions of the two environmental sensors (14a, 14b) respectively spaced apart from one another, wherein the environmental sensors (14) are in the form of ultrasonic sensors with a temporal resolution of the order of magnitude of 60 to 120 ms.

**Revendications**

**1.** Procédé pour déterminer la position d'un objet (16) dans un environnement (20) d'un véhicule automobile, en particulier pour un système d'aide à la conduite, dans lequel un objet (16) est détecté au moyen de capteurs d'environnement (14) disposés sur le véhicule automobile et dans lequel au moins deux distances ($r_1$, $r_2$) de l'objet (16) par rapport à des capteurs d'environnement mutuellement espacés (14a, 14b) sont déterminées, dans lequel les deux distances ($r_1$, $r_2$) déterminées de l'objet (16) par rapport aux capteurs d'environnement mutuellement espacés (14a, 14b) sont additionnées l'une à l'autre et le résultat de l'addition des deux distances ($r_1$, $r_2$) est associé à une coordonnée elliptique sur une carte elliptique, et dans lequel les deux distances ($r_1$, $r_2$) déterminées de l'objet (16) par rapport aux capteurs d'environnement mutuellement espacés (14a, 14b) sont soustraites l'une à l'autre et le résultat de la valeur de la soustraction des deux distances est associé à une coordonnée hyperbolique sur une carte hyperbolique, et dans lequel les coordonnées elliptiques et hyperboliques d'un système de coordonnées elliptiques-hyperboliques sont attribuées à l'objet (16), dans lequel le système de coordonnées elliptiques-hyperboliques présente un maillage discret qui est défini par une base elliptique et une base hyperbolique, dans lequel les positions des deux capteurs d'environnement mutuellement espacés (14a, 14b) sont associées à des foyers communs de la base elliptique et de la base hyperbolique, dans lequel les capteurs d'environnement (14) sont réalisés sous la forme de capteurs à ultrasons ayant une résolution temporelle de l'ordre de 60 à 120 ms.

**2.** Procédé selon la revendication 1, **caractérisé en ce que** le système de coordonnées elliptiques-hyperboliques discrétisé est plus grossièrement discrétisé en champ lointain (26) qu'en champ proche (28) .

**3.** Procédé selon la revendication 1, **caractérisé en ce qu'**un index est attribué à chaque région (20a, 20b, 20c, 20d, 20e, 20f, 20g, 20h, 20i, 20j) du système de coordonnées elliptiques-hyperboliques discrétisé.

**4.** Procédé selon l'une des revendications précédentes, **caractérisé en ce qu'**une rangée (46) d'une table de consultation est affectée de façon unique à chaque région (20a, 20b, 20c, 20d, 20e, 20f, 20g, 20h, 20i, 20j) du système de coordonnées elliptiques-hyperboliques discrétisé.

**5.** Procédé selon l'une des revendications précédentes, **caractérisé en ce que** l'environnement (20) du véhicule automobile est couvert dans la zone de détection (18) des capteurs d'environnement (14) par au moins un système de coordonnées elliptiques-hyperboliques.

6. Programme d'ordinateur destiné à mettre en oeuvre l'un des procédés selon les revendications 1 à 5 lorsque le programme d'ordinateur est exécuté sur un dispositif informatique programmable, en particulier un RISC.

7. Système d'aide à la conduite, en particulier pour la navigation, comprenant au moins deux capteurs d'environnement (14a, 14b) mutuellement espacés disposés sur un véhicule automobile, au moyen desquels deux distances ($r_1$, $r_2$) d'un objet (16) dans un environnement (20) d'un véhicule automobile et par rapport aux capteurs d'environnement (14a, 14b) peuvent être déterminées, un module permettant de calculer la valeur de l'addition des deux distances ($r_1$, $r_2$) déterminées de l'objet (16) par rapport aux capteurs d'environnement mutuellement espacés (14a, 14b), un module permettant de calculer la valeur de la soustraction des deux distances ($r_1$, $r_2$) de déterminées l'objet (16) par rapport aux capteurs d'environnement mutuellement espacés (14a, 14b) et un module permettant d'attribuer des coordonnées elliptiques et hyperboliques d'un système de coordonnées elliptiques-hyperboliques de l'objet (16), dans lequel le système de coordonnées elliptiques-hyperboliques présente un maillage discret qui est défini par une base elliptique et une base hyperbolique, dans lequel les positions des deux capteurs d'environnement mutuellement espacés (14a, 14b) sont associées à des foyers communs de la base elliptique et de la base hyperbolique, dans lequel les capteurs d'environnement (14) sont réalisés sous la forme de capteurs à ultrasons ayant une résolution temporelle de l'ordre de 60 à 120 ms.

## Fig. 1

## Fig. 2

Fig. 3

Fig. 4

**Fig. 5**

34 · 32 · 30 · 28 · 26 · 20 · 16 · 18 · 2 · 4 · 12 · 14a · 14b · $r_1$ · $r_2$

**Fig. 6**

**Fig. 7**

**EP 2 680 025 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 624026 A
- US 20110231094 A1
- GB 813126 A